# EUROPEAN PATENT SPECIFICATION

(11) **EP 4 215 627 B1**
(45) Date of publication and mention of the grant of the patent: **13.05.2026**
(21) Application number: 21941469.5
(22) Date of filing: 07.06.2021
(51) Int. Cl.: C21C 7/06, C21C 7/064, C21C 7/072, C21C 7/10, C21C 5/36, C21C 7/00, B22D 11/00, C22C 38/00, C22C 38/02, C22C 38/04, C22C 38/06, C22C 38/12, C22C 38/14

(54) **LOW-COST SMELTING METHOD FOR POLAR-USE STEEL USING ULTRA-HIGH PHOSPHORUS MOLTEN IRON**
KOSTENGÜNSTIGES SCHMELZVERFAHREN FÜR STAHL MIT POLARER VERWENDUNG UNTER VERWENDUNG VON GESCHMOLZENEM EISEN MIT ULTRAHOHEM PHOSPHORGEHALT
PROCÉDÉ DE FUSION À FAIBLE COÛT POUR ACIER À USAGE POLAIRE UTILISANT DU FER FONDU À TENEUR ULTRA-HAUTE EN PHOSPHORE

(30) Priority: 20.05.2021 CN 202110553104
(43) Date of publication of application: 26.07.2023
(73) Proprietor: Laiwu Steel Yinshan Section Co., Ltd., Ji'nan, Shandong 271104 (CN); Shandong Iron and Steel Company Ltd., Ji'nan, Shangdong 271104 (CN)
(72) Inventor: WANG, Zhongxue, Ji'nan City, Shandong 271104 (CN); MA, Heng, Ji'nan City, Shandong 271104 (CN); HE, Kang, Ji'nan City, Shandong 271104 (CN); WANG, Tengfei, Ji'nan City, Shandong 271104 (CN); ZHANG, Pei, Ji'nan City, Shandong 271104 (CN); SUN, Zhengxu, Ji'nan City, Shandong 271104 (CN); ZHANG, Qingpu, Ji'nan City, Shandong 271104 (CN); WANG, Yuexiang, Ji'nan City, Shandong 271104 (CN); HUO, Xiaoxin, Ji'nan City, Shandong 271104 (CN); LI, Yan, Ji'nan City, Shandong 271104 (CN)
(74) Representative: Global IP Europe Patentanwaltskanzlei
(86) International application number: PCT/CN2021/098736
(87) International publication number: WO 2022/236900

(56) References cited:
- CN-A- 106 884 067
- CN-A- 108 624 735
- CN-A- 109 280 731
- CN-A- 109 321 816
- CN-A- 109 593 907
- CN-A- 109 628 820
- CN-A- 109 778 054
- CN-A- 110 117 747
- CN-A- 110 724 881
- CN-A- 111 363 889
- CN-A- 112 048 665
- CN-A- 112 048 665
- CN-B- 101 240 397
- CN-B- 102 206 788
- CN-B- 102 719 728
- CN-B- 109 161 630
- JP-A- 2013 234 379

## Description

### Technical Field

The invention belongs to the field of ferrous metallurgy, relates to an ultra-high phosphorus molten iron low-cost smelting method for polar steel.

### Background

With the increasing shortage of energy in the world, countries have successively increased the development of polar oil and gas energy and built many offshore platforms, and the demand for ultra-low temperature resistant steel for polar use has soared. Due to the extremely low polar temperature, the content of phosphorus in steel is very important to the toughness of steel, however, the content of phosphorus in domestic molten iron varies greatly, some steel mills are affected by ore raw materials, and the ultra-high phosphorus molten iron produced is not suitable for the production of low phosphorus steel, which seriously slowed down the pace of production. With the increasing demand for low-phosphorus high-quality steel by users, how to use converters to achieve such ultra-high phosphorus hot metal smelting polar low-phosphorus steels at the lowest cost is the focus of research at this stage. At present, some enterprises at home and abroad widely use converter duplex method to produce low-phosphorus steel, such as LD-NRP method of JFE, H converter of Kobe steel, BRP method of Baosteel, etc. Such processes have high requirements for equipment, and in the process of converter molten iron transferring, the heat loss is large and the production efficiency is low. There is also a double-slag method that continuously performs dephosphorization and decarburization of molten iron on the same converter, which is simple to operate and does not require new equipment, and has been widely used at home and abroad.

Although there are many patents on smelting low-phosphorus steel with high-phosphorus molten iron, such smelting process has the disadvantages of long process flow and high cost. Several similar patents are briefly described below:
Patent document CN 109593907A discloses "a method for smelting low-phosphorus steel", which produces finished products of qualified billet with P≤0.005% by controlling the converter blowing lance position, oxygen supply intensity, bottom blowing flow, and slag control under tapping , but this method is only applicable to molten iron with phosphorus content less than or equal to 0.10%.

Patent document CN 109897933A discloses "a high-efficiency smelting process for producing low-phosphorus clean steel in a converter", which smelts low-phosphorus steel by a converter double-slag method, but the phosphorus content of molten iron used in the smelting method is all less than 0.13%, and the residual slag treatment is easy to produce phosphorus back phenomenon, which is not suitable for ultra-high phosphorus hot metal smelting.

Patent document CN 109402323A discloses "a method for smelting ultra-low phosphorus steel with ultra-high phosphorus molten iron". This patent optimizes the ratio of lime ash and slag modification agent in the LF refining process, and adjusts the composition of the steel slag to increase the phosphorus content of the steel slag capacity, thereby increasing the distribution ratio of phosphorus in steel slag and molten steel, providing favorable conditions for dephosphorization. However, the smelting method does not describe the converter smelting process in detail, and the P content in the molten steel in the LF converter is at a low level, and the LF refining process takes too long, which is not conducive to high-efficiency and low-cost batch industrial production.

Document CN112048665 reveals a method for preparing a steel board for polar marine engineering. In terms of mass percentage, the steel plate components are: C: 0.06~0.09%, Si: 0.20~0.35%, Mn: 1.48~1.63%, Nb: 0.020%~0.035%, Ti: 0.010%~0.020%, V: 0.020 %~0.035%, Ni: 0.08%~0.17%, Als: 0.015%~ 0.040%, P: ≤0.013%, S: ≤0.005%. The preparation method of the steel plate includes: primary smelting, refining, and casting to obtain a cast slab, which is then slowly cooled for not less than 48 h. The slowly cooled cast slab is heated and then rolled to obtain a steel plate; the steel plate is then cooled for not less than 60 hours. This steel type has excellent comprehensive properties such as high strength, low temperature resistance, easy welding, corrosion resistance, and good low temperature aging impact toughness. The method requires slow cooling steps, which substantially slow down the process.

### SUMMARY

In view of the deficiencies of the prior art, the purpose of this application is to provide an ultra-high phosphorus molten iron low-cost smelting method for polar steel, which can realize the requirement of using molten iron with a phosphorus content higher than 0.150% to smelt steel with a phosphorus content of less than 0.007%, and can significantly reduce the ductile-brittle transition temperature of steel, and meet the requirements of polar and extremely cold working conditions.

To achieve the above object, the present invention invention, that is described in the appended claims, adopts the following technical solutions:
An ultra-high phosphorus molten iron low-cost smelting method for polar steel, comprising successively:
converter smelting step: smelting, deoxidizing and tapping alloying w materials including molten iron;
LF refining step: performing slag adjustment and refining on the molten steel obtained in the converter smelting step to obtain a refined molten steel;
RH degassing step: vacuum degassing the refined molten steel;
continuous casting step: performing continuous casting on the molten steel obtained after the RH degassing step to obtain a cast billet.

**In the above-mentioned** ultra-high phosphorus molten iron low-cost smelting method for polar steel, in the converter smelting step, in the molten iron as the raw materials, when the content of P element is ≥ 0.15wt%, the content of Si element is 0.15-0.6wt%, the content of S element is ≤ 0.006wt%, and the content of As element is ≤ 0.006wt%; the temperature of the molten iron is ≥ 1230°C; if the molten iron temperature is too low, it may cause problems such as serious molten steel back-blowing, large blowing loss, high steel material consumption, high cost, unsecured molten steel quality, and reduced converter age.

In the above-mentioned ultra-high phosphorus molten iron low-cost smelting method for polar steel, in the converter smelting step, preferably the raw material also comprises scrap steel, wherein the mass of scrap steel/(mass of molten iron + scrap steel) ≤ 8%.

In the above-mentioned ultra-high phosphorus molten iron low-cost smelting method for polar steel, in the converter smelting step, when the mass content of silicon in the molten iron as raw material is ≥ 0.30%, the smelting is carried out by using a double-slag process, the double-slag process specifically includes:
step 1): adding a part of the slag to the raw material, and then blowing oxygen into the raw material by using an oxygen lance, after the primary slag is completely smelted, taking the oxygen lance out of the converter and pouring the slag; step 2): using the oxygen lance to blow oxygen into the molten steel obtained in step 1), and then adding the remaining slag in batches, and continuing the smelting, during the process, measuring the TSC temperature and content of C of the molten steel, and selecting lime or sinter ore to be added according to the measurement results to ensure the alkalinity in the later stage and promote the slag smelting.

In the step 2), the time from adding the remaining slag to measuring the TSC temperature and content of C of the molten steel is 70-90s.

In the step 2), the total time of blowing oxygen (i.e. the total reaction time of **the step** 2)) is 240-300s.

The slag includes a slag-forming agent and a coolant; the slag-forming agent is lime and dolomite; the coolant is sinter ore; in the step 1), the addition amount of lime is 20-22.5kg/ton steel, the addition amount of dolomite is 3.5-5.5kg/ton steel, and the addition amount of sinter ore is 28.5-32kg/ton steel;
in the step 1), the time for blowing oxygen is 5-6min;
in the step 1), after the slag is completely smelted, the oxygen lance is lifted out of the converter within 15-30s;
in the slag of the step 2), the addition amount of lime is 21-25kg/ton steel, the addition amount of dolomite is 3.5-5.0kg/ton steel, and the addition amount of sinter ore is 14-20kg/ton steel;
in step 2), the TSC temperature is controlled to 1540°C to 1590°C, and the carbon content is controlled to 0.25wt%- 0.40wt%., when TSC ≤ 1540°C, adding the lime and continuing oxygen blowing smelting; when TSC is ≥ 1590 °C, adding sinter ore.

In the step 2), selecting to add lime or sinter ore to continue the blowing according to the measured TSC temperature result, so as to ensure that the TSO temperature of the converter is controlled to 1600°C-1650°C, and the carbon content is controlled to 0.07wt%-0.09wt%; performing spot blowing and temperature increasing if the TSO temperature of the converter is less than 1600 °C.

In the above-mentioned ultra-high phosphorus molten iron low-cost smelting method for polar steel, as a preferred embodiment, in the converter smelting step, the raw material comprises molten iron and scrap steel; wherein the mass ratio of scrap steel to the raw material is ≤8%.

In the above-mentioned ultra-high phosphorus molten iron low-cost smelting method for polar steel, in the converter smelting step, when the mass content of silicon in the molten iron as raw material is < 0.30%; the smelting is carried out the smelting by using a single-slag process, wherein the single-slag process specifically includes: step a): adding lime, sinter ore and dolomite to the raw material, step b) after the slag is completely smelted in the whole process, measuring TSC, and then selecting to add lime or sinter ore according to the measured TSC temperature result;
in the step a), the lime is added in 2-3 batches, and the addition amount of ton steel is 42.9-46.2 kg/t (that is, add 42.9-46.2kg per ton of molten iron); preferably, the sinter ore is added in 3-4 batches, the addition amount of ton steel is 39.2-42.8kg/t; preferably, the dolomite is added in 2-3 batches, and the addition amount of ton steel is 8.57-10.7kg/t;
in the step b), the addition amount of the lime or sinter ore is 2.15-3.57 Kg per ton of the molten iron; preferably, when the measured TSC is ≤ 1540°C, adding the lime and continuing oxygen blowing smelting; when the measured TSC is ≥ 1590 °C, adding sinter ore as a coolant to control the reaction rhythm.
in the step b), if the content of C is ≥ 0.10% according to the TSO measurement result, performing spot blowing to control the contents of C and P contents of the molten steel.

In the above-mentioned ultra-high phosphorus molten iron low-cost smelting method for polar steel, as a preferred embodiment, in the converter smelting step, blowing nitrogen and argon at the bottom of the converter during the whole smelting process.

In the above-mentioned ultra-high phosphorus molten iron low-cost smelting method for polar steel, in the converter smelting step, in the first 7-8 minutes of smelting, blowing nitrogen at the bottom, wherein flow rate of nitrogen is 450-580 Nm³/h in the first 1-3min, and the flow rate of nitrogen in the later stage is increased to 800-900 Nm³/h(the volume of nitrogen is: the gas volume under the pressure is one atmosphere pressure, and the temperature is 0 °C); after bottom blowing nitrogen for 7-8 minutes of smelting, switching to argon, and increasing the flow rate of argon to 1000-1100 Nm³/h; in the early stage of blowing, the stirring of molten pool is strengthened to promote lime melting and increase slag formation rate; at the end of blowing and refining, the stirring intensity of molten pool is increased, the reaction balance of slag steel is promoted, and the dephosphorization effect is strengthened.

In the above-mentioned ultra-high phosphorus molten iron low-cost smelting method for polar steel, as a preferred embodiment, in the converter smelting step, when the carbon-oxygen equilibrium of the converter is≤ 0.0021 and the carbon at the measuring end point of the converter is ≤0.045%, taping the steel directly. When the carbon-oxygen equilibrium of the converter is >0.0032, the TSO composition of the converter needs to be determined as C: 0.06-0.09 wt%, P≤0.006 wt%, S≤0.020 wt%, then the steel can be tapped; when the carbon-oxygen equilibrium of the converter is between 0.0021-0.0032, the carbon at the measuring end point of the converter needs to be ≤0.045%, otherwise, spot blowing.

In the above-mentioned ultra-high phosphorus molten iron low-cost smelting method for polar steel, in the converter smelting step, after the smelting and before the deoxidizing, using a high-low-low lance level (2000mm-1500mm-500mm) to perform slag splashing and converter protection using nitrogen, repeatedly lifting lance during the process of slag splashing, after the slag splashes dry, closing the nitrogen and lifting lance, and the time of the slag splashing is 140-200s; the invention adopts three-stage lance positions to realize slag splashing in the whole converter, and the thickness uniformity of slag splashing is good; compared with oxygen, strong redox reaction occurs, which is not suitable for slag splashing and converter protection, and argon gas is expensive, and economical is poor. The invention adopts nitrogen slag splashing to protect the converter, which can make full use of the high basicity final slag of the converter and the nitrogen by-product of the oxygen production plant, and the cost is low.

In the above-mentioned ultra-high phosphorus molten iron low-cost smelting method for polar steel, in the converter smelting step, the deoxidation is carried out with ferro-manganese-aluminum added in an amount of 1.7-2.5kg/t of steel.

In the above-mentioned ultra-high phosphorus molten iron low-cost smelting method for polar steel, as a preferred embodiment, in the converter smelting step, the alloys used in the alloying include: metal manganese, ferrosilicon, ferroniobium, ferrovanadium and nickel plate.

In the above-mentioned ultra-high phosphorus molten iron low-cost smelting method for polar steel, in the LF refining step, the substances used for the slag adjusting are aluminum slag and calcium carbide, preferably, the substances used for the slag adjusting further comprise lime; preferably, the slag is adjusted to a final slag alkalinity of ≥ 2.2, and the top slag before leaving the station must be a yellow-white slag or a white slag, and the retention time of the yellow-white slag or the white slag is not less than 10 minutes.

In the above-mentioned ultra-high phosphorus molten iron low-cost smelting method for polar steel, in the LF refining step, after the slag adjusting, an aluminum wire is fed for aluminum enrichment, and a titanium wire is fed for titanium enrichment.

In the above-mentioned ultra-high phosphorus molten iron low-cost smelting method for polar steel, in the LF refining step, the time of the refining is 30 - 45min; In the above-mentioned ultra-high phosphorus molten iron low-cost smelting method for polar steel, in the LF refining step, the mass ratio of the slag material used for the slag adjusting is: lime: fluorite: calcium carbide: aluminum slag = (3-5): (3-5): 1: (1-2), preferably, lime: fluorite: calcium carbide: aluminum slag = (4-5): (4-5): 1: (1-2) .

In the above-mentioned ultra-high phosphorus molten iron low-cost smelting method for polar steel, as a preferred embodiment, in the RH degassing step, when the vacuum degassing is performed, the degree of vacuum is ≤ 133Pa, the circulation time is not less than 15 minutes, and the degassing time is greater than 5 minutes.

In the above-mentioned ultra-high phosphorus molten iron low-cost smelting method for polar steel, as a preferred embodiment, in the RH degassing step, after the vacuum degassing, feeding calcium aluminum wire 80-100 m/converter, and blowing softly is no less than 10 minutes.

In the above-mentioned ultra-high phosphorus molten iron low-cost smelting method for polar steel, as a preferred embodiment, in the continuous casting step, the superheat of the molten steel is controlled < 25°C.

In the above-mentioned ultra-high phosphorus molten iron low-cost smelting method for polar steel, as a preferred embodiment, in the continuous casting step, for 175 section, the pulling speed during continuous casting is 1.25-1.35m/min; for 200 section, the pulling speed during continuous casting is 1.2-1.4m/min; for 250 section, the pulling speed during continuous casting is 1.1-1.3m/min; for 300mm section, the pulling speed during continuous casting is 0.85-0.95m/min;

In the above-mentioned ultra-high phosphorus molten iron low-cost smelting method for polar steel, as a preferred embodiment, in the continuous casting step, the crystallizer is made of peritectic steel to protect slag; the middle ladle is covered with a covering agent combined with carbonized rice husks to ensure good coverage of the liquid surface of the middle ladle: the long nozzle of the large ladle is sealed with argon, and the flow rate is 90- 120L/min; if the flow rate is less than 90L/min, it is difficult to isolate the air, and if the flow rate is greater than 120L/min, the argon gas will be wasted.

In the above-mentioned ultra-high phosphorus molten iron low-cost smelting method for polar steel, as a preferred embodiment, in mass percentage, the steel composition obtained by the smelting process comprises: C: 0.06-0.10%, Si: 0.20-0.35, Mn: 1.5-1.65%, Nb: 0.010-0.030%, V: 0.010-0.035%, Ti: 0.010-0.035%, Al: 0.015-0.040%.

Compared with the prior art, the beneficial effects of the present invention are:
1. The method for smelting low-phosphorus steel with ultra-high-phosphorus molten iron of polar steel described in the present application determines whether to adopt the double-slag process according to the silicon content in the molten iron, if the silicon content in the molten iron is ≥0.30%, the converter is adopted the double-slag process: if the silicon content in the molten iron is < 0.30%, the converter is adopted the single-slag process, and then the refining deep dephosphorization process to further dephosphor, this method can realize continuous and stable smelting of steel with phosphorus content less than 0.007% using ultra-high phosphorus molten iron as slag, and the consumption of required excipients is low, the production pace is fast, and it has broad promotion prospects.
2. According to the Si content of molten iron, the smelting in single and double slag areas can be distinguished, which greatly saves the consumption of smelting slags, shortens the smelting cycle, and speeds up the production process.
3. For ultra-high-P molten iron, the optimized slag-forming material ratio and reasonable oxygen blowing flow and oxygen-blowing time are used to obtain ultra-low phosphorus molten iron through converter smelting.
4. In the LF refining stage, adopt a reasonable slag material ratio and smelting method to reduce the amount of molten steel returned to P.
5. The method for smelting low-phosphorus steel with ultra-high-phosphorus molten iron of polar steel described in this application is relatively inexpensive, and the process is simple and easy to operate in extreme cold conditions and high comprehensive performance requirements in engineering.
6. After the billet smelted and continuously casted by this method, after rolling, the yield strength of the steel plate is ≥420 MPa, the tensile strength is 520-680MPa, the impact energy at -52°C is ≥100J, and the area shrinkage rate is ≥19%.

### DETAILED DESCRIPTION OF THE EMBODIMENTS

In order to highlight the purpose, technical solutions and advantages of the present invention, the present invention is further described below with reference to the embodiments, which are expressed by way of explanation of the present invention rather than limiting the present invention. The technical solutions of the present invention are not limited to the specific embodiments listed below, but also include any combination of specific embodiments.

Any feature disclosed in this specification, unless expressly stated otherwise, may be replaced by other equivalent or alternative features serving a similar purpose. Unless stated otherwise, each feature is only one example of a series of equivalent or similar features.

### Example 1

An ultra-high phosphorus molten iron low-cost smelting method for polar steel:

### (1) converter smelting

Using a 140t top-bottom double blowing converter, the raw material composition is: 141t high phosphorus desulfurization molten iron (C: 5.65%, Mn: 0.213%, P: 0.151%, S: 0.002%, Si: 0.54%, As: 0.0020%, molten iron temperature 1310°C), the amount of scrap steel is 10t. The double-slag process is used for smelting, during the smelting, the oxygen is first blown out of the lance, and the lance position is controlled at about 1500mm. After the oxygen lance is fired, the flow rate of the oxygen lance is adjusted to about 25000m³/h, the lance position is 1800mm, 3050kg of lime, 3600kg of sinter ore and 400kg of dolomite are added, the first batch of materials is added 150s before blowing. 30 seconds after the primary slag is completely melted, lift the lance to pour the slag, and the timing of lifting the lance is about 5 minutes in principle.

Switch the oxygen after the nitrogen slag is fired for the second time, after the oxygen lance is fired, the flow rate of the oxygen lance is adjusted to about 24500m³/h, and the lance position is about 1700mm, then, a total of 3200kg of lime, 2700kg of sinter and 550kg of dolomite are added in batches, while avoiding blowing and drying. The TSC temperature is 1540°C-1590°C, and the carbon content is controlled at 0.25%-0.40%, after the TSC is measured, 150kg lime is added to adjust the TSO temperature to 1600°C-1650°C. Finally, the high-low-low lance position (2000mm-1500mm-500mm) is used to splash the slag to protect the converter, the lance is repeatedly lifted and pressed in the slag splashing process, after the slag is dried, the nitrogen is turned off and the lance is lifted, the slag splashing time is 186s. When the carbon-oxygen equilibriums of the converter are ≤ 0.0021 and the carbon at the measuring end point of the converter is ≤ 0.045wt%, the tapping temperature of the converter is 1620°C, and when tapping, 260kg of aluminum-manganese-iron, 2100kg of metallic manganese, 120kg of nickel plate, 60kg of vanadium-iron, 50kg of ferroniobium and 440kg of ferrosilicon are added; 600 kg of synthetic slag and 200Kg of pre-melted slag are added along the steel flow.

Bottom blowing nitrogen and argon during the whole smelting process, and bottom blowing nitrogen during the first 8 minutes of smelting, wherein the first 3min nitrogen flow rate is 500 m³/h, and the last 5min nitrogen flow rate is increased to 850 m³/h; nitrogen is blown at the bottom of smelting for 8 minutes and switched to argon gas, and the flow rate of argon gas is increased to 1050 m³/h.

### (2) LF smelting

Adding 200kg of lime, 200kg of fluorite, 50kg of calcium carbide and 80kg of aluminum slag for LF refining to adjust the slag; an 150m aluminum wire is fed for aluminum enrichment, and a 130 titanium wire is fed for titanium enrichment. The final slag alkalinity is controlled above 2.2.

During the whole smelting process, argon is blown at the bottom and stirred, the argon pressure can be appropriately increased in the early stage, and a soft blowing with a small pressure is used before going out to ensure that the inclusions float up, the time for refining the soft blowing argon is 5 minutes, and the total refining time is 45 minutes.

### (3) RH smelting

During RH treatment, the insertion depth of dip tube is 400mm; in the treatment, the vacuum degree is 30Pa, the circulation time is 22 min, and the pure degassing time is 10 min. At the end of RH treatment, calcium aluminum wire 90 m/converter is fed, soft blowing is performed for 10 minutes, and the RH smelting cycle is 23 minutes.

### (4) Continuous casting

The crystallizer is made of peritectic steel to protect slag; the middle ladle is covered with a covering agent combined with carbonized rice husks to ensure good coverage of the liquid surface of the middle ladle. The long nozzle of the large ladle is sealed with argon, and the flow rate is 90 /min, the crystallizer uses a non-sinusoidal oscillation mode. The cross-sectional size of the continuous casting billet is 250mm * 2400mm and the pulling speed is 1.1 m/min.

At the end of the number of castings, C: 0.07%, Si: 0.28%, Mn: 1.52%, P: 0.006%, S: 0.001%, Nb: 0.025%, Ti: 0.015%, V: 0.025%, Ni: 0.11%, Als: 0.020%; the consumption of this converter is: lime 48.53kg/ton steel, total slag consumption 54.41kg/ton steel, oxygen consumption 47.05Nm³/ton steel.

Five number of castings of steel are produced by the method of this example, the content of P in the steel are all less than 0.007wt%, and after rolling, the resulting steel billet had a yield strength of 425-510MPa, a tensile strength of 520-590MPa, an impact energy of 150-210J at -60 C, and the area shrinkage rate is 22-32%.

### Example 2

An ultra-high phosphorus molten iron low-cost smelting method for polar steel:

### (1) converter smelting

Using a 140t top-bottom double blowing converter, the slag composition is: 141t high phosphorus desulfurization molten iron 92%(C: 4.437%, Mn: 0.213%, P: 0.148%, S: 0.003%, Si: 0.294%, As: 0.0018%, molten iron temperature 1316°C), the balance is scrap. In the smelting process, the single-slag process is adopted, and the lance position is controlled at about 1500mm during the lance blowing stage under oxygen; after the oxygen lance is fired, the oxygen lance flow is adjusted to about 26000m³/h, the lance position is 1800mm, and the oxygen supply pressure is 0.8 MPa; in the early 8 minutes of smelting, the bottom blowing nitrogen, the nitrogen bottom blowing flow rate is 560 m³/h, and then increases to 880 m³/h, after the bottom blowing for 8 minutes, it is switched to argon gas, the flow rate is increased to 1200 m³/h, 6200kg of sinter ore, Lime 6040kg, dolomite 800kg are added, to ensure the alkalinity in the later stage and promote the slag smelting; the final lance position is controlled at about 1200mm. Finally, the high-low-low lance position (2000mm-1500mm-500mm) is used to splash the slag and protect the converter, the lance is repeatedly lifted and pressed in the slag splashing process, after the slag is dried, the nitrogen is turned off and the lance is lifted, the slag splashing time is 163s. The tapping temperature of the converter is 1646°C, and when tapping, 240kg of aluminum-manganese-iron, 2040kg of metallic manganese, 120kg of nickel plate, 60kg of vanadium-iron, 50kg of ferroniobium and 440kg of ferrosilicon are added; 600 kg of synthetic slag and 200Kg of pre-melted slag are added along the steel flow.

### (2) Lf smelting

Adding 352kg of lime, 157kg of fluorite, 180kg of calcium carbide and 20kg of aluminum slag for LF refining to adjust the slag; an 120m aluminum wire is fed for aluminum enrichment, and a 150 titanium wire is fed for titanium enrichment. The final slag alkalinity is controlled above 2.2.

During the whole smelting process, argon is blown at the bottom and stirred, the argon pressure can be appropriately increased in the early stage, and a soft blowing with a small pressure is used before going out to ensure that the inclusions float up, the time for soft argon blowing is 5 minutes, and the total smelting time is 42 minutes.

### (3) RH smelting

During RH smelting, the insertion depth of dip tube is 400mm; in the treatment, the vacuum degree is 30Pa, the circulation time is 22 min, and the pure degassing time is 10 min. At the end of RH treatment, calcium aluminum wire 80 m/converter is fed, soft blowing is performed for 10 minutes, and the RH smelting cycle is 22 minutes.

### (4) Continuous casting

The crystallizer is made of peritectic steel to protect slag; the middle ladle is covered with a covering agent combined with carbonized rice husks to ensure good coverage of the liquid surface of the middle ladle. The long nozzle of the large ladle is sealed with argon, and the flow rate is 90/min, the crystallizer uses a non-sinusoidal oscillation mode. The cross-sectional size of the continuous casting billet is 300mm,and the pulling speed is 0.85 m/min.

At the end of the number of castings, C: 0.07%, Si: 0.27%, Mn: 1.51%, P: 0.0065%, S: 0.001%, Nb: 0.026%, Ti: 0.015%, V: 0.026%, Ni: 0.12%, Als: 0.020%; the consumption of this converter is: lime 47kg/ton steel, total slag consumption 51.5kg/ton steel, oxygen consumption 47.79Nm³/ton steel, steel material consumption is 1.10t/ton steel.

Five number of castings of steel are produced by the method of this example, the content of P in the steel are all less than 0.007wt%, and after rolling, the resulting steel billet had a yield strength of 440-500MPa, a tensile strength of 525-605MPa, an impact energy of 130-190J at -60 C, and the area shrinkage rate is 23-29%.

## Claims

1. An ultra-high phosphorus molten iron low-cost smelting method for polar steel, comprising successively:
a converter smelting step: smelting, deoxidizing and tapping alloying raw materials including molten iron;
wherein,
in the converter smelting step, in the molten iron as the raw materials, the content of P element is ≥ 0.15 wt%, the content of Si element is 0.15 to 0.6 wt%, the content of S element is ≤ 0.006 wt%, and the content of As element is ≤ 0.006 wt%; the temperature of the molten iron is ≥ 1230°C;
in the converter smelting step, when the mass content of silicon in the molten iron as raw materials is ≥ 0.30%, the smelting is carried out by using a double-slag process, wherein the double-slag process specifically includes:
step 1): adding a part of slag to the raw materials, wherein the slag includes a slag-forming agent and a coolant, wherein the slag-forming agent is lime and dolomite, and the coolant is sinter ore; then blowing oxygen into the raw materials by using an oxygen lance; and, after a primary slag is completely smelted, taking the oxygen lance out of the converter and pouring the slag;
in the step 1), the addition amount of the lime is 20 to 22.5 kg/ton steel, the addition amount of the dolomite is 3.5 to 5.5 kg/ton steel, and the addition amount of sinter ore is 28.5 to 32 kg/ton steel;
in the step 1), the time for blowing oxygen is 5 to 6 min; and
in the step 1), after the primary slag is completely smelted, the oxygen lance is lifted out of the converter within 15-30 s;
step 2): using the oxygen lance to blow oxygen into the molten steel obtained in step 1), then adding the remaining slag in batches, and continuing the smelting, wherein, during the smelting process, the TSC temperature and the content of C of the molten steel are measured, and the lime or the sinter ore is selected to be added according to the measurement results to ensure an alkalinity in the later stage and promote the slag smelting completely; wherein the slag includes a slag-forming agent and a coolant, wherein the slag-forming agent is lime and dolomite, and the coolant is sinter ore;
in the step 2), the time from adding the remaining slag to measuring the TSC temperature and the content of C of the molten steel is 70 to 90 s;
the total reaction time of step 2) is 240 to 300 s;
in the slag of the step 2), the addition amount of the lime is 21 to 25 kg/ton steel, the addition amount of the dolomite is 3.5 to 5.0 kg/ton steel, and the addition amount of the sinter ore is 14 to 20 kg/ton steel;
in the step 2), the TSC temperature is controlled to 1540°C to 1590°C, the content of C is controlled to 0.25 wt% to 0.40 wt%; and
in the step 2), according to the measured TSC temperature result, the lime or sinter ore is selected to be added to continue the blowing, so as to ensure that the TSO temperature of the converter is controlled to 1600°C to 1650°C, and the content of C is controlled to 0.07 wt% to 0.09 wt%; and spot blowing and temperature increasing are performed if the TSO temperature of the converter is less than 1600°C;
in the converter smelting step, when the mass content of silicon in the molten iron as raw material is < 0.30%, the smelting is carried out by using a single-slag process; wherein the single-slag process specifically includes:
step a): adding lime, sinter ore and dolomite to the raw materials,
in the step a), the lime is added in 2-3 batches, and the addition amount of ton steel is 42.9 to 46.2 kg/t; the sinter ore is added in 3-4 batches, and the addition amount of ton steel is 39.2 to 42.8 kg/t; the dolomite is added in 2-3 batches, and the addition amount of ton steel is 8.57 to 10.7 kg/t;
step b): after the slag is completely smelted in the whole process, the TSC is measured, and then lime or sinter ore is selected to be added according to the measured TSC result;
in the step b), the addition amount of the lime or sinter ore is 2.15 to 3.57 kg per ton of the molten iron; when TSC ≤ 1540°C, the lime is added and oxygen blowing smelting is continued; when TSC is ≥ 1590 °C, the sinter ore is added; and
in the step b), according to the TSO measurement result, if the content of C is ≥ 0.10%, the spot blowing is performed to control the contents of C and P of the molten steel;
in the converter smelting step, in the first 7-8 minutes of the smelting, nitrogen is blown at the bottom, wherein the flow rate of nitrogen is 450 to 580 Nm³/h in the first 1 to 3min, and the flow rate of nitrogen in the later stage is increased to 800 to 900 Nm³/h; after nitrogen is blown at the bottom for 7-8 minutes in the smelting, switch to argon, and the flow rate of argon is increased to 1000 to1100 Nm³/h;
in the converter smelting step, when carbon-oxygen equilibrium of the converter is > 0.0032, the TSO composition of the converter needs to be determined as C: 0.06 to 0.09 wt%, P ≤ 0.006 wt%, S ≤ 0.020 wt%, then the steel can be tapped; when the carbon-oxygen equilibrium of the converter is between 0.0021 and 0.0032, the carbon at the measuring end point of the converter needs to be ≤ 0.045%, otherwise, spot blowing is performed;
in the converter smelting step, the deoxidizing is carried out by using ferro-manganese-aluminum, and the addition amount of the ferro-manganese-aluminum is 1.7-2.5 kg/t steel;
in the converter smelting step, after the smelting and before the deoxidizing, slag splashing for converter protection is preformed by using a 2000 mm lance level - 1500 mm lance level - 500 mm lance level with nitrogen, wherein the lance is repeatedly lifted during the process of slag splashing, and after the slag splashes dry, the nitrogen is closed and the lance is lifted, and the time of the slag splashing is 140 to 200 s;
a LF refining step: performing slag adjusting and refining on molten steel obtained in the converter smelting step to obtain a refined molten steel,
wherein,
in the LF refining step, the mass ratio of the slag used for the slag adjusting is: lime : fluorite : calcium carbide : aluminum slag = (3-5) : (3-5) : 1 : (1-2); and after the slag adjusting, an aluminum wire is fed for aluminum enrichment, and a titanium wire is fed for titanium enrichment; and the time of the refining is 30 to 45 min;
a RH degassing step: vacuum degassing the refined molten steel;
a continuous casting step: performing continuous casting on the molten steel obtained after the RH degassing step to obtain a cast billet,
wherein the content of P in the steel component obtained by the smelting method is less than 0.007 wt% by mass percentage.

2. The ultra-high phosphorus molten iron low-cost smelting method for polar steel according to claim 1, **characterized in that**, in the converter smelting step, the raw material further comprises scrap steel; wherein the mass of scrap steel / (mass of molten iron + scrap steel) ≤ 8%.

3. The ultra-high phosphorus molten iron low-cost smelting method for polar steel according to claim 1, **characterized in that**, in the converter smelting step, blowing nitrogen and argon at the bottom of the converter during the whole smelting process.

4. The ultra-high phosphorus molten iron low-cost smelting method for polar steel according to claim 1, **characterized in that**, in the converter smelting step, when carbon-oxygen equilibrium of the converter is ≤ 0.0021 and the carbon at the measuring end point of the converter is ≤ 0.045%, taping the steel directly.

5. The ultra-high phosphorus molten iron low-cost smelting method for polar steel according to claim 1, **characterized in that**, in the converter smelting step, the alloys used in the alloying include: metal manganese, ferrosilicon, ferroniobium, ferrovanadium and nickel plate.

6. The ultra-high phosphorus molten iron low-cost smelting method for polar steel according to claim 1, **characterized in that**, in the LF refining step, the slag is adjusted to a final slag alkalinity of ≥ 2.2, and a top slag before leaving the station must be a yellow-white slag or a white slag, and the retention time of the yellow-white slag or the white slag is not less than 10 minutes.

7. The ultra-high phosphorus molten iron low-cost smelting method for polar steel according to claim 1, **characterized in that**, in the RH degassing step, when the vacuum degassing is performed, the degree of vacuum is ≤ 133Pa, circulation time is not less than 15 minutes, and degassing time is greater than 5 minutes.

8. The ultra-high phosphorus molten iron low-cost smelting method for polar steel according to claim 1, **characterized in that**, in the RH degassing step, after the vacuum degassing, a calcium aluminum wire is fed at 80-100 m/converter, and blow softly is not less than 10 minutes.

9. The ultra-high phosphorus molten iron low-cost smelting method for polar steel according to claim 1, **characterized in that**, in the continuous casting step, the superheat degree of the molten steel is controlled < 25°C.

10. The ultra-high phosphorus molten iron low-cost smelting method for polar steel according to claim 1, **characterized in that**, in the continuous casting step, for 175 section, the pulling speed during continuous casting is 1.25-1.35m/min; for 200 section, the pulling speed during continuous casting is 1.2-1.4m/min; for 250 section, the pulling speed during continuous casting is 1.1-1.3m/min; for 300mm section, the pulling speed during continuous casting is 0.85-0.95m/min.

11. The ultra-high phosphorus molten iron low-cost smelting method for polar steel according to claim 1, **characterized in that**, in the continuous casting step, a crystallizer is made of peritectic steel to protect slag; the middle ladle is covered with a covering agent combined with carbonized rice husks to ensure good coverage of the liquid surface of the middle ladle: the long nozzle of the large ladle is sealed with argon, and the flow rate is 90-120L/min.

12. The ultra-high phosphorus molten iron low-cost smelting method for polar steel according to claim 1, **characterized in that**, in mass percentage, the steel composition obtained by the smelting process comprises: C: 0.06-0.10%, Si: 0.20-0.35, Mn: 1.5-1.65%, Nb: 0.010-0.030%, V: 0.010-0.035%, Ti: 0.010-0.035%, Al: 0.015-0.040%.

## Patentansprüche

1. Kostengünstiges Schmelzverfahren von geschmolzenem Eisen mit ultrahohem Phosphorgehalt für polaren Stahl, das nacheinander aufweist:
einen Konverterschmelzschritt: Schmelzen, Desoxidieren und Abstechen von Legierungsausgangsmaterialien, die geschmolzenes Eisen enthalten;
wobei,
in dem Konverterschmelzschritt in dem geschmolzenen Eisen als Ausgangsmaterialien der Gehalt an P-Element ≥ 0,15 Gew.-% beträgt, der Gehalt an Si-Element 0,15 bis 0,6 Gew.-% beträgt, der Gehalt an S-Element ≤ 0,006 Gew.-% beträgt und der Gehalt an As-Element ≤ 0,006 Gew.-% beträgt; die Temperatur des geschmolzenen Eisens ≥ 1230 °C ist;
in dem Konverterschmelzschritt, wenn der Massengehalt an Silizium in dem geschmolzenen Eisen als Ausgangsmaterialien ≥ 0,30 % beträgt, das Schmelzen unter Verwendung eines Doppelschlackenprozesses durchgeführt wird, wobei der Doppelschlackenprozess insbesondere umfasst:
Schritt 1): Hinzufügen eines Teils der Schlacke zu den Ausgangsmaterialien, wobei die Schlacke ein schlackenbildendes Mittel und ein Kühlmittel aufweist, wobei das schlackenbildende Mittel Kalk und Dolomit ist und das Kühlmittel Sintererz ist; dann Einblasen von Sauerstoff in die Ausgangsmaterialien unter Verwendung einer Sauerstofflanze; und, nachdem eine primäre Schlacke vollständig geschmolzen ist, Herausnehmen der Sauerstofflanze aus dem Konverter und Gießen der Schlacke;
im Schritt 1) beträgt die Zugabemenge des Kalks 20 bis 22,5 kg/Tonne Stahl, die Zugabemenge des Dolomits beträgt 3,5 bis 5,5 kg/Tonne Stahl und die Zugabemenge des Sintererzes beträgt 28,5 bis 32 kg/Tonne Stahl;
im Schritt 1) beträgt die Zeit für das Einblasen von Sauerstoff 5 bis 6 Minuten; und
im Schritt 1) wird, nachdem eine primäre Schlacke vollständig geschmolzen ist, die Sauerstofflanze innerhalb von 15-30 s aus dem Konverter gehoben;
Schritt 2): Verwenden der Sauerstofflanze, um Sauerstoff in den in Schritt 1) erhaltenen geschmolzenen Stahl zu blasen, dann Hinzufügen der restlichen Schlacke in Chargen und Fortsetzen des Schmelzens, wobei während des Schmelzprozesses die TSC-Temperatur und der C-Gehalt des geschmolzenen Stahls gemessen werden und der Kalk oder das Sintererz ausgewählt wird, um gemäß den Messergebnissen zugegeben zu werden, um eine Alkalität im späteren Stadium sicherzustellen und das vollständige Schmelzen der Schlacke zu fördern; wobei die Schlacke ein schlackenbildendes Mittel und ein Kühlmittel enthält, wobei das schlackenbildende Mittel Kalk und Dolomit ist und das Kühlmittel Sintererz ist;
im Schritt 2) die Zeit von dem Hinzufügen der restlichen Schlacke bis zum Messen der TSC-Temperatur und des C-Gehalts des geschmolzenen Stahls 70 bis 90 s beträgt;
die Gesamtreaktionszeit von Schritt 2) 240 bis 300 s beträgt;
in der Schlacke des Schritts 2) die Zugabemenge des Kalks 21 bis 25 kg/Tonne Stahl beträgt, die Zugabemenge des Dolomits 3,5 bis 5,0 kg/Tonne Stahl beträgt und die Zugabemenge des Sintererzes 14 bis 20 kg/Tonne Stah beträgt I;
im Schritt 2) die TSC-Temperatur auf 1540 °C bis 1590 °C kontrolliert wird, der Gehalt an C auf 0,25 Gew.-% bis 0,40 Gew.- % kontrolliert wird; und
im Schritt 2) gemäß dem gemessenen TSC-Temperaturergebnis der Kalk oder das Sintererz ausgewählt wird, um das Blasen fortzusetzen, um sicherzustellen, dass die TSO-Temperatur des Konverters auf 1600 °C bis 1650 °C kontrolliert wird und der Gehalt an C auf 0,07 Gew.-% bis 0,09 Gew.-% kontrolliert wird; und ein Punktblasen und eine Temperaturerhöhung durchgeführt werden, wenn die TSO-Temperatur des Konverters weniger als 1600 °C beträgt;
in dem Konverterschmelzschritt, wenn der Massengehalt an Silizium in dem geschmolzenen Eisen als Ausgangsmaterial < 0,30 % ist, das Schmelzen unter Verwendung eines Einzelschlackenprozesses durchgeführt wird; wobei der Einzelschlackenprozess insbesondere umfasst:
Schritt a): Hinzufügen von Kalk, Sintererz und Dolomit zu den Ausgangsmaterialien,
im Schritt a) der Kalk in 2-3 Chargen hinzugefügt wird und die Zugabemenge pro Tonne Stahl 42,9 bis 46,2 kg/t beträgt; das Sintererz in 3-4 Chargen hinzugefügt wird und die Zugabemenge pro Tonne Stahl 39,2 bis 42,8 kg/t beträgt; der Dolomit in 2-3 Chargen zugegeben wird und die Zugabemenge pro Tonne Stahl 8,57 bis 10,7 kg/t beträgt;
Schritt b): nachdem die Schlacke im gesamten Prozess vollständig geschmolzen ist, der TSC-Wert gemessen wird, und dann Kalk oder Sintererz ausgewählt wird, um gemäß dem gemessenen TSC-Ergebnis hinzugefügt zu werden;
im Schritt b) die Zugabemenge von Kalk oder Sintererz 2,15 bis 3,57 kg pro Tonne des geschmolzenen Eisens beträgt; wenn TSC ≤ 1540 °C ist, der Kalk hinzugefügt wird und das Sauerstoffblasschmelzen fortgesetzt wird; wenn die TSC ≥ 1590 °C ist, das Sintererz hinzugefügt wird; und
im Schritt b) wird gemäß dem TSO-Messergebnis, wenn der C-Gehalt ≥ 0,10 % ist, das Punktblasen durchgeführt, um den C- und P-Gehalt des geschmolzenen Stahls zu kontrollieren;
im Konverterschmelzschritt in den ersten 7-8 Minuten des Schmelzens Stickstoff am Boden geblasen wird, wobei die Durchflussrate des Stickstoffs in den ersten 1 bis 3 Minuten 450 bis 580 Nm³/h beträgt und die Durchflussrate des Stickstoffs im späteren Stadium auf 800 bis 900 Nm³/h erhöht wird; nachdem der Stickstoff in der Schmelze 7-8 Minuten lang am Boden geblasen wurde, auf Argon umgeschaltet wird und die Durchflussrate des Argons auf 1000 bis 1100 Nm³/h erhöht wird;
im Konverterschmelzschritt, wenn das Kohlenstoff-Sauerstoff-Gleichgewicht des Konverters > 0,0032 ist, muss die TSO-Zusammensetzung des Konverters bestimmt werden als: C: 0,06 bis 0,09 Gew.-%, P ≤ 0,006 Gew.-%, S ≤ 0,020 Gew.-%, dann kann der Stahl abgestochen werden; wenn das Kohlenstoff-Sauerstoff-Gleichgewicht des Konverters zwischen 0,0021 und 0,0032 liegt, muss der Kohlenstoffgehalt am Messendpunkt des Konverters ≤ 0,045 % sein, andernfalls wird ein Punktblasen durchgeführt;
im Konverterschmelzschritt die Desoxidation unter Verwendung von Ferromangan-Aluminium durchgeführt wird, und die Zugabemenge des Ferromangan-Aluminiums 1,7-2,5 kg/t Stahl beträgt;
in dem Konverterschmelzschritt nach dem Schmelzen und vor dem Desoxidieren ein Schlackenspritzen zum Konverterschutz unter Verwendung eines 2000 mm Lanzenpegels - 1500 mm Lanzenpegel - 500 mm Lanzenpegels mit Stickstoff durchgeführt wird, wobei die Lanze während des Prozesses des Schlackenspritzens wiederholt angehoben wird, und nachdem die Schlackenspritzer trocken sind, der Stickstoff geschlossen und die Lanze angehoben wird, und die Zeit des Schlackenspritzens 140 bis 200 s beträgt;
einen LF-Raffinationsschritt: Durchführen von Schlackeneinstellung und Raffination an geschmolzenem Stahl, der in dem Konverterschmelzschritt erhalten wurde, um einen raffinierten geschmolzenen Stahl zu erhalten, wobei,
in dem LF-Raffinationsschritt das Massenverhältnis der für die Schlackeneinstellung verwendeten Schlacke ist: Kalk : Fluorit : Kalziumkarbid : Aluminiumschlacke = (3-5) : (3-5) : 1 : (1-2); und nach der Schlackeneinstellung ein Aluminiumdraht zur Aluminiumanreicherung und ein Titandraht zur Titananreicherung zugeführt wird; und die Zeit der Raffination 30 bis 45 Minuten beträgt;
einen RH-Entgasungsschritt: Vakuumentgasung der raffinierten Stahlschmelze;
einen Stranggießschritt: Durchführen eines Stranggießens mit dem nach dem RH-Entgasungsschritt erhaltenen geschmolzenen Stahl, um einen Gusswalzblock zu erhalten,
wobei der P-Gehalt in der durch das Schmelzverfahren erhaltenen Stahlkomponente weniger als 0,007 Gew.-% Massenprozent beträgt.

2. Kostengünstiges Schmelzverfahren von geschmolzenem Eisen mit ultrahohem Phosphorgehalt für polaren Stahl nach Anspruch 1, **dadurch gekennzeichnet, dass** im Konverterschmelzschritt das Ausgangsmaterial ferner Stahlschrott aufweist, wobei die Masse des Stahlschrotts / (Masse des geschmolzenen Eisens + Stahlschrott) ≤ 8 % ist.

3. Kostengünstiges Schmelzverfahren von geschmolzenem Eisen mit ultrahohem Phosphorgehalt für polaren Stahl nach Anspruch 1, **dadurch gekennzeichnet, dass** im Konverterschmelzschritt Stickstoff und Argon am Boden des Konverters während des gesamten Schmelzprozesses eingeblasen werden.

4. Kostengünstiges Schmelzverfahren von geschmolzenem Eisen mit ultrahohem Phosphorgehalt für polaren Stahl nach Anspruch 1, **dadurch gekennzeichnet, dass** im Konverterschmelzschritt, wenn das Kohlenstoff-Sauerstoff-Gleichgewicht des Konverters ≤ 0,0021 ist und der Kohlenstoff am Messendpunkt des Konverters ≤ 0,045% ist, der Stahl direkt abgestochen wird.

5. Kostengünstiges Schmelzverfahren von geschmolzenem Eisen mit ultrahohem Phosphorgehalt für polaren Stahl nach Anspruch 1, **dadurch gekennzeichnet, dass** im Konverterschmelzschritt die beim Legieren verwendeten Legierungen umfassen: Metallmangan, Ferrosilizium, Ferroniob, Ferrovanadium und Vernicklungsbad.

6. Kostengünstiges Schmelzverfahren von geschmolzenem Eisen mit ultrahohem Phosphorgehalt für polaren Stahl nach Anspruch 1, **dadurch gekennzeichnet, dass** die Schlacke im LF-Raffinierungsschritt auf eine endgültige Schlackenalkalität von ≥ 2,2 eingestellt wird und eine obere Schlacke vor dem Verlassen der Station eine gelb-weiße Schlacke oder eine weiße Schlacke sein muss, und die Verweilzeit der gelb-weißen Schlacke oder der weißen Schlacke nicht weniger als 10 Minuten beträgt.

7. Kostengünstiges Schmelzverfahren von geschmolzenem Eisen mit ultrahohem Phosphorgehalt für polaren Stahl nach Anspruch 1, **dadurch gekennzeichnet, dass** im RH-Entgasungsschritt, wenn die Vakuumentgasung durchgeführt wird, der Grad des Vakuums ≤ 133Pa ist, die Zirkulationszeit nicht weniger als 15 Minuten beträgt und die Entgasungszeit größer als 5 Minuten ist.

8. Kostengünstiges Schmelzverfahren von geschmolzenem Eisen mit ultrahohem Phosphorgehalt für polaren Stahl nach Anspruch 1, **dadurch gekennzeichnet, dass** im RH-Entgasungsschritt nach der Vakuumentgasung ein Kalzium-Aluminium-Draht mit 80-100 m/Konverter zugeführt wird und das sachte Blasen nicht weniger als 10 Minuten beträgt.

9. Kostengünstiges Schmelzverfahren von geschmolzenem Eisen mit ultrahohem Phosphorgehalt für polaren Stahl nach Anspruch 1, **dadurch gekennzeichnet, dass** im Stranggießschritt der Überhitzungsgrad des geschmolzenen Stahls < 25 °C gesteuert wird.

10. Kostengünstiges Schmelzverfahren von geschmolzenem Eisen mit ultrahohem Phosphorgehalt für polaren Stahl nach Anspruch 1, **dadurch gekennzeichnet, dass** im Stranggießschritt die Ziehgeschwindigkeit während des Stranggießens für einen 175er-Abschnitt 1,25-1,35 m/min beträgt; für einen 200er-Abschnitt die Ziehgeschwindigkeit während des Stranggießens 1,2-1,4 m/min beträgt; für einen 250er-Abschnitt die Ziehgeschwindigkeit während des Stranggießens 1,1-1,3 m/min beträgt; für einen 300er-Abschnitt die Ziehgeschwindigkeit während des Stranggießens 0,85-0,95 m/min beträgt.

11. Kostengünstiges Schmelzverfahren von geschmolzenem Eisen mit ultrahohem Phosphorgehalt für polaren Stahl nach Anspruch 1, **dadurch gekennzeichnet, dass** im Stranggießschritt ein Kristallisator aus peritektischem Stahl hergestellt wird, um die Schlacke zu schützen; die mittlere Pfanne mit einem Abdeckmittel in Kombination mit karbonisierten Reishülsen bedeckt wird, um eine gute Bedeckung der Flüssigkeitsoberfläche der mittleren Pfanne sicherzustellen; die lange Düse der großen Pfanne mit Argon abgedichtet wird und die Durchflussrate 90-120 l/min beträgt.

12. Kostengünstiges Schmelzverfahren von geschmolzenem Eisen mit ultrahohem Phosphorgehalt für polaren Stahl nach Anspruch 1, **dadurch gekennzeichnet, dass** die durch das Schmelzverfahren erhaltene Stahlzusammensetzung in Massenprozent aufweist: C: 0,06-0,10 %, Si: 0,20-0,35, Mn: 1,5-1,65 %, Nb: 0,010-0,030 %, V: 0,010-0,035 %, Ti: 0,010-0,035 %, Al: 0,015-0,040 %.

## Revendications

1. Procédé de fusion à faible coût de fer fondu à ultra-haute teneur en phosphore pour acier polaire, comprenant successivement :
une étape de fusion par convertisseur : fusion, désoxydation et coulée des matières premières d'alliage dont le fer fondu ;
où,
lors de l'étape de fusion par convertisseur, dans le fer fondu en tant que matière première, la teneur en élément P est ≥ 0,15 % en poids, la teneur en élément Si est comprise entre 0,15 et 0,6 % en poids, la teneur en élément S est ≤ 0,006 % en poids, et la teneur en élément As est ≤ 0,006 % en poids ; la température du fer fondu est ≥ 1230 °C ;
lors de l'étape de fusion par convertisseur, si la teneur en masse de silicium dans le fer fondu en tant que matière première est ≥ 0,30 %, la fusion est effectuée au moyen d'un procédé à double laitier, ledit procédé à double laitier comprenant spécifiquement :
étape 1) : ajout d'une partie du laitier aux matières premières, le laitier comprenant un agent de formation du laitier et un agent de refroidissement, l'agent de formation du laitier étant de la chaux et la dolomite, et l'agent de refroidissement étant du minerai de frittage ;
puis soufflage d'oxygène dans les matières premières au moyen d'une lance à oxygène ; et, après fusion complète d'un laitier primaire, retrait de la lance à oxygène hors du convertisseur et coulée du laitier ;
lors de l'étape 1), la quantité de chaux ajoutée est comprise entre 20 et 22,5 kg/tonne d'acier, la quantité de dolomite ajoutée est comprise entre 3,5 et 5,5 kg/tonne d'acier et la quantité de minerai fritté ajoutée est comprise entre 28,5 et 32 kg/tonne d'acier ;
lors de l'étape 1), le temps de soufflage de l'oxygène est compris entre 5 et 6 minutes ; et
lors de l'étape 1), après fusion complète du laitier primaire, la lance à oxygène est retirée du convertisseur dans un laps de temps de 15 à 30 secondes ;
étape 2) : utilisation de la lance à oxygène pour souffler de l'oxygène dans l'acier fondu obtenu lors de l'étape 1), puis ajout du laitier restant en plusieurs fois et poursuite de la fusion, où, au cours du processus de fusion, la température TSC et la teneur en C de l'acier fondu sont mesurées, et la chaux ou le minerai fritté sont sélectionnés pour être ajoutés en fonction des résultats des mesures afin d'assurer une alcalinité dans la phase ultérieure et améliorer la fusion complète du laitier ; où le laitier comprend un agent de formation du laitier et un agent de refroidissement, l'agent de formation du laitier étant de la chaux et de la dolomite, et l'agent de refroidissement étant du minerai fritté ;
lors de l'étape 2), le temps écoulé entre l'ajout du laitier restant et la mesure de la température TSC et de la teneur en C de l'acier fondu est compris entre 70 et 90 s ;
le temps de réaction total de l'étape 2) est compris entre 240 et 300 s ;
dans le laitier de l'étape 2), la quantité de chaux ajoutée est comprise entre 21 et 25 kg/tonne d'acier, la quantité de dolomite ajoutée est comprise entre 3,5 et 5,0 kg/tonne d'acier, et la quantité de minerai fritté ajoutée est comprise entre 14 et 20 kg/tonne d'acier ;
lors de l'étape 2), la température TSC est réglée entre 1540 °C et 1590 °C, la teneur en C est réglée entre 0,25 % en poids et 0,40 % en poids ; et
lors de l'étape 2), en fonction du résultat de température TSC mesurée, la chaux ou le minerai fritté est sélectionné pour ajout afin de poursuivre le soufflage, de manière à assurer que la température TSO du convertisseur est réglée entre 1600 °C et 1650 °C, et que la teneur en C est réglée entre 0,07 % en poids et 0,09 % en poids ; et un soufflage ponctuel et une augmentation de température sont effectués si la température TSO du convertisseur est inférieure à 1600 °C ;
lors de l'étape de fusion par convertisseur, si la teneur en masse de silicium dans le fer fondu en tant que matière première est < 0,30 %, la fusion est effectuée au moyen d'un procédé à un seul laitier ; où ledit procédé à un seul laitier comprend spécifiquement :
étape a) : ajout de chaux, de minerai fritté et de dolomite aux matières premières,
lors de l'étape a), la chaux est ajoutée en 2-3 fois, et la quantité d'acier ajoutée est comprise entre 42,9 et 46,2 kg/t ; le minerai fritté est ajouté en 3-4 fois, et la quantité d'acier ajoutée est comprise entre 39,2 à 42,8 kg/t ; la dolomite est ajoutée en 2-3 fois, et la quantité d'acier ajoutée est comprise entre 8,57 et 10,7 kg/t ;
étape b) : après fusion complète du laitier dans l'ensemble du processus, le TSC est mesuré, puis la chaux ou le minerai fritté sont sélectionnés pour être ajoutés en fonction du résultat du TSC mesuré ;
lors de l'étape b), la quantité de chaux ou de minerai fritté ajoutée est comprise entre 2,15 et 3,57 kg par tonne de fer fondu ; si le TSC est < 1540 °C, la chaux est ajoutée et la fusion par soufflage d'oxygène est poursuivie ; si le TSC est ≥ 1590 °C, le minerai fritté est ajouté ; et
lors de l'étape b), en fonction du résultat de mesure TSO, si la teneur en C est ≥ 0,10 %, le soufflage ponctuel est effectué pour régler les teneurs en C et en P de l'acier fondu ;
lors de l'étape de fusion par convertisseur, pendant les 7 à 8 premières minutes de la fusion, de l'azote est soufflé au fond, le débit d'azote étant compris entre 450 et 580 Nm³/h pendant les 1 à 3 premières minutes, et le débit d'azote dans la phase ultérieure étant augmenté à 800 à 900 Nm³/h ; après soufflage de l'azote soufflé au fond pendant 7 à 8 minutes lors de la fusion, l'argon est introduit, et le débit d'argon est augmenté à 1 000 à 1 100 Nm³/h ;
lors de l'étape de fusion par convertisseur, si l'équilibre carbone-oxygène du convertisseur est > 0,0032, la composition TSO du convertisseur doit être déterminée comme suit : C : 0,06 à 0,09 % en poids, P ≤ 0,006 % en poids, S ≤ 0,020 % en poids, puis l'acier peut être coulé ; si l'équilibre carbone-oxygène du convertisseur est compris entre 0,0021 et 0,0032, le carbone au point de mesure final du convertisseur doit être ≤ 0,045 %, sinon, un soufflage ponctuel est effectué ;
lors de l'étape de fusion par convertisseur, la désoxydation est effectuée au moyen d'aluminium ferromanganèse, et la quantité d'aluminium ferromanganèse ajoutée est comprise entre 1,7 et 2,5 kg/t d'acier ;
lors de l'étape de fusion par convertisseur, après fusion et avant désoxydation, les projections de scories pour la protection du convertisseur sont effectuées avec un niveau de lance de 2000 mm - un niveau de lance de 1500 mm - un niveau de lance de 500 mm avec de l'azote, la lance étant relevée à plusieurs reprises pendant le processus de projection de scories, et, après séchage des scories projetées, l'azote est arrêté et la lance est relevée, et la durée de projection de scories est comprise entre 140 et 200 s ;
une étape d'affinage LF : ajustement et raffinage du laitier sur l'acier fondu obtenu lors de l'étape de fusion par convertisseur afin d'obtenir un acier fondu raffiné, où,
lors de l'étape d'affinage LF, le rapport de masse du laitier utilisé pour l'ajustement du laitier est : chaux : fluorite : carbure de calcium : laitier d'aluminium = (3-5) : (3-5) : 1 : (1-2) ; et après ajustement du laitier, introduction d'un fil d'aluminium pour enrichissement en aluminium, et introduction d'un fil de titane pour enrichissement en titane ; la durée d'affinage étant comprise entre 30 et 45 minutes ;
une étape de dégazage RH : dégazage sous vide de l'acier fondu raffiné ;
une étape de coulée continue : exécution d'une coulée continue sur l'acier fondu obtenu après l'étape de dégazage RH pour obtenir une billette coulée,
où la teneur en P dans le composant d'acier obtenu par le procédé de fusion est inférieure à 0,007 % en poids en pourcentage massique.

2. Procédé de fusion à faible coût de fer fondu à ultra-haute teneur en phosphore pour acier polaire selon la revendication 1, **caractérisé en ce que**, lors de l'étape de fusion par convertisseur, la matière première comprend en outre de la ferraille d'acier ; où la masse de ferraille d'acier / (masse de fer fondu + ferraille d'acier) ≤ 8 %.

3. Procédé de fusion à faible coût de fer fondu à ultra-haute teneur en phosphore pour acier polaire selon la revendication 1, **caractérisé en ce que**, lors de l'étape de fusion par convertisseur, de l'azote et de l'argon sont soufflés au fond du convertisseur pendant toute la durée de la fusion.

4. Procédé de fusion à faible coût de fer fondu à ultra-haute teneur en phosphore pour acier polaire selon la revendication 1, **caractérisé en ce que**, lors de l'étape de fusion par convertisseur, si l'équilibre carbone-oxygène du convertisseur est ≤ 0,0021 et que le carbone au point final de mesure du convertisseur est ≤ 0,045 %, l'acier est coulé directement.

5. Procédé de fusion à faible coût de fer fondu à ultra-haute teneur en phosphore pour acier polaire selon la revendication 1, **caractérisé en ce que**, lors de l'étape de fusion par convertisseur, les alliages utilisés dans l'alliage comprennent : le manganèse métallique, le ferrosilicium, le ferroniobium, le ferrovanadium et le placage de nickel.

6. Procédé de fusion à faible coût de fer fondu à ultra-haute teneur en phosphore pour acier polaire selon la revendication 1, **caractérisé en ce que**, lors de l'étape d'affinage LF, le laitier est ajusté à une alcalinité finale de laitier ≥ 2,2, et un laitier supérieur avant sortie de la station doit être un laitier blanc-jaune ou un laitier blanc, et le temps de rétention du laitier blanc-jaune ou du laitier blanc n'est pas inférieur à 10 minutes.

7. Procédé de fusion à faible coût de fer fondu à ultra-haute teneur en phosphore pour acier polaire selon la revendication 1, **caractérisé en ce que**, lors de l'étape de dégazage RH, lorsque le dégazage sous vide est effectué, le degré de vide est ≤ 133Pa, le temps de circulation n'est pas inférieur à 15 minutes, et le temps de dégazage est supérieur à 5 minutes.

8. Procédé de fusion à faible coût de fer fondu à ultra-haute teneur en phosphore pour acier polaire selon la revendication 1, **caractérisé en ce que**, lors de l'étape de dégazage RH, après le dégazage sous vide, un fil d'aluminium calcique est introduit à 80-100 m/convertisseur, et la durée de soufflage n'est pas inférieure à 10 minutes.

9. Procédé de fusion à faible coût de fer fondu à ultra-haute teneur en phosphore pour acier polaire selon la revendication 1, **caractérisé en ce que**, lors de l'étape de coulée continue, le degré de surchauffe de l'acier fondu est régulé < 25 °C.

10. Procédé de fusion à faible coût du fer fondu à ultra-haute teneur en phosphore pour acier polaire selon la revendication 1, **caractérisé en ce que**, lors de l'étape de coulée continue, pour une section 175, la vitesse de traction pendant la coulée continue est comprise entre 1,25 et 1,35 m/min ; pour une section 200, la vitesse de traction pendant la coulée continue est comprise entre 1,2 et 1,4 m/min ; pour une section 250, la vitesse de traction pendant la coulée continue est comprise entre 1,1 et 1,3 m/min ; pour une section 300mm, la vitesse de traction pendant la coulée continue est comprise entre 0,85 et 0,95 m/min.

11. Procédé de fusion à faible coût de fer fondu à ultra-haute teneur en phosphore pour acier polaire selon la revendication 1, **caractérisé en ce que**, lors de l'étape de coulée continue, un cristalliseur est constitué d'acier péritectique pour protéger le laitier ; la poche intermédiaire est recouverte d'un agent de revêtement combiné à des balles de riz carbonisées pour assurer une bonne couverture de la surface liquide de la poche intermédiaire : la buse longue de la grande poche est scellée avec de l'argon, et le débit est compris entre 90 et 120L/min.

12. Procédé de fusion à faible coût de fer fondu à ultra-haute teneur en phosphore pour acier polaire selon la revendication 1, **caractérisé en ce que**, en pourcentage massique, la composition d'acier obtenue par le procédé de fusion comprend :
C : 0,06-0,10 %, Si : 0,20-0,35, Mn : 1,5-1,65 %, Nb : 0,010-0,030 %, V : 0,010-0,035 %, Ti : 0,010-0,035 %, Al : 0,015-0,040 %.
